# EUROPEAN PATENT APPLICATION

(11) **EP 3 462 401 A1**
(43) Date of publication of application: **03.04.2019**
(21) Application number: 18197192.0
(22) Date of filing: 27.09.2018
(51) Int. Cl.: G06Q 30/06, G06Q 20/38

(54) **PAYMENT SYSTEM AND PAYMENT METHOD**

(30) Priority: 02.10.2017 JP 2017192581
(71) Applicant: Denso Wave Incorporated, Chita-gun, Aichi 470-2297 (JP)
(72) Inventor: HIRASAWA, Shinji, Chita-gun, Aichi 470-2297 (JP)
(74) Representative: Kuhnen & Wacker Patent- und Rechtsanwaltsbüro PartG mbB

(57) **Abstract**

A payment system prevents a payment method unavailable when receiving an article from being selected when purchasing the article. When an article is purchased from a commodity sale website through a computer, the computer displays an application payment code including a record of application payment address information of a payment method selection page associated with the payment of the article. When the application payment address information is read from the application payment code displayed on the computer by a mobile terminal that has installed a payment application, with the payment application being started to perform payment processing, the payment method selection page is displayed on the screen of the mobile terminal, with selectable indication of several payment methods. When any one of the payment methods is selected, the selected payment method is transmitted to the commodity sale website together with purchase information.

## Description

### BACKGROUND OF THE INVENTION

### [Technical Field]

The present disclosure relates to a payment system and a payment method for electronic commerce (e-commerce) performed using an information code.

### [Related Art]

Currently, commodity sales through the Internet, or e-commerce transactions, are commonly available. E-commerce transactions adopt various ways of payment, taking account of security or other matters. For example, a patent publication "JP 2006-243962 A" discloses an article price payment system that is known as a technique related to such a payment system for purchasing articles through the Internet. In this article price payment system, the user accesses a commodity sale server to transmit thereto information on the article the user desires to purchase, information on the user, and information on the agent through which payment is desired to be made. Receiving the information, the commodity sale server transmits the article information and the user information to the server corresponding to the agent. The agent server reads the user's payment information specified by the user information, while performing payment processing based on the received article information. Thus, the user can make a payment to the agent in which the payment information has been registered, for the article purchased from another agent. Since the user's payment information does not have to be notified to the commodity sale server, security is improved when articles are purchased through the Internet.

When purchasing an article by way of a website on the Internet, another payment method i.e. payment on delivery is also available. An article purchased through the Internet is usually delivered to the destination by a delivery company or the like so that, for example, the user can receive the article at the user's residence from the delivery operator. Payment on delivery is a payment method in which the user can make a payment for the purchase by cash or by a credit card when receiving the article. Along with such diversification in payment method, still another payment method is becoming available. To make a payment through this payment method, an application program for payment (also simply termed payment application hereinafter) is required to be installed in a mobile terminal, such as a smartphone.

At the time of purchasing an article, a payment method is required to be determined. However, the purchaser may select a payment method which is not available to the purchaser. For example, a purchaser who does not possess a mobile terminal that has installed a payment application may purchase an article using a computer or the like connected to the Internet. In this case, the purchaser may select the payment method that needs to use the payment application when receiving the article. Thus, if the payment method selected at the time of purchasing the article is unavailable to the purchaser at the time of receiving the article, the delivery operator is required to carry out on the spot a process of changing the payment method. This process may involve lots of time and labor.

### SUMMARY

It is thus desired to provide a configuration that can prevent the purchaser, when purchasing an article, from selecting a payment method which is not available to the purchaser at the time of receiving the article.

An aspect of the present disclosure is a payment system for a purchaser to make a payment using a mobile terminal and a display unit. The system includes a payment application distribution server that distributes a payment application that is an application program installed in the mobile terminal to purchase an article from a commodity sale website. When an article is purchased from the commodity sale website, the display unit displays an information code including a record of address information of a payment method selection page associated with the article. The mobile terminal that has installed the payment application distributed from the payment application distribution server includes a processing section, a reading section, a display section, an input section and a transmission section.

The processing section performs payment processing associated with payment, upon start of the payment application. The reading section optically reads the information code displayed on the display unit in a state where the processing section is performing the payment processing. The display section displays the payment method selection page when the address information is read by the reading section and the payment method selection page is accessed based on the address information. The input section is operated when inputting any one of a plurality of payment methods selectably indicated on the payment method selection page. The transmission section transmits a selection result resulting from the input operation of the input section to the commodity sale website, together with purchase information including information associated with a purchaser and a delivery destination.

According to the aspect, when an article is purchased from a commodity sale website, the display unit displays the information code including a record of address information of a payment method selection page related to payment of the article. When the mobile terminal that has installed the payment application causes the reading section to read the address information from the information code displayed on the display section, in a state where payment processing is performed by the processing section with the payment application being started, the payment method selection page accessed based on the address information is displayed. When any one of several payment methods selectably indicated on the payment method selection page is selected according to the input operation of the input section, the selection result is transmitted to the commodity sale website by the transmission section, together with the purchase information.

Thus, in order to select any one of the payment methods on the payment method selection page when purchasing an article from a commodity sale website, it is necessary to read the application payment code including a record of the application payment address information of the payment method selection page, by using the mobile terminal that has installed the payment application. Therefore, even when the payment method indicated on the payment method selection page includes the payment method that uses the payment application, a mobile terminal or the like that has not installed the payment application cannot make an access to the payment method selection page, and cannot select the payment method that uses the payment application. Thus, the payment method that is not available at the time of receiving the article is prevented from being selected at the time of purchasing the article.

According to the aspect, the information code is a partially non-public code having a public area including a record of information that can be made public, and a non-public area including a record of the address information that is encrypted so as to be decrypted using a decryption key. The reading section reads the address information from the information code, using the decryption key possessed by the payment application.

Thus, a mobile terminal that has not installed the payment application cannot even read the address information, and thus cannot make an access to the payment method selection page. Consequently, the payment method making use of the payment application is reliably prevented from being selected.

According to the aspect, the public area includes a record of address information of a website for downloading the payment application from the payment application distribution server (download site).

Thus, if a mobile terminal that has not installed the payment application reads the information code displayed on the display unit, the address information of the download site of the payment application is acquired. Therefore, the purchaser is not only prompted to download the payment application, but also can readily download the payment application.

According to the aspect, when the reading section reads the article information recorded on the second information code in a state where the payment processing is being performed by the processing section, the transmission section transmits the article information and information associated with a purchaser to the delivery management server.

Thus, when the second information code shown by the delivery operator when receiving the article is read by the mobile terminal in which the payment application has been started, the delivery management server promptly and correctly becomes aware of the article received by the purchaser and the time of reception, based on the information received from the mobile terminal. Thus, delivery management of articles can be efficiently conducted.

According to the aspect, when the reading section reads the article information recorded on the second information code in a state where the payment processing is being performed by the processing section, the transmission section transmits position information of the mobile terminal acquired by the position information acquisition section to the delivery management server, together with the article information and the information associated with a purchaser.

Thus, the delivery management server promptly and correctly becomes aware of the article received by the purchaser and the time of reception. Consequently, delivery management can be conducted with higher security.

### BRIEF DESCRIPTION OF THE DRAWINGS

In the accompanying drawings:
Fig. 1 is a schematic diagram illustrating a payment system including a mobile terminal, according to a first embodiment of the present disclosure;
Fig. 2 is a schematic block diagram illustrating an electrical configuration of the mobile terminal shown in Fig. 1;
Fig. 3 is a flow diagram illustrating a procedure from choosing an article to be purchased to finalizing the purchase;
Fig. 4 is a diagram illustrating a screen displaying detailed information, etc. on a chosen article, and two icons for selecting a payment method;
Fig. 5 is a diagram illustrating the screen of a computer displaying an application payment code, etc. when the purchaser has selected an icon of payment application as a payment method.
Fig. 6 is a diagram illustrating the screen of a mobile terminal selectably displaying payment methods that are available for payment application, together with individual information;
Fig. 7 is a diagram illustrating the screen of a mobile terminal displaying the purchased article, the amount of payment based on the payment method that has been selected, and the like;
Fig. 8 is a flow diagram illustrating a procedure of delivering a purchased article; and
Fig. 9 is a diagram illustrating a delivery slip indicating an acknowledgement code, etc.

### DETAILED DESCRIPTION OF THE PREFERRED EMBODIMENTS

With reference to the accompanying drawings, a description will be given of a payment system according to a first embodiment of the present disclosure.

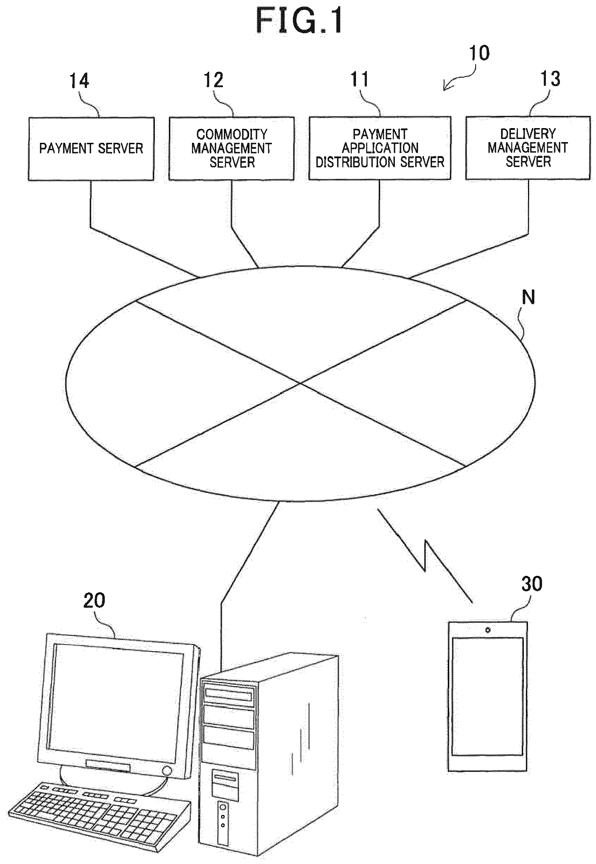

Fig. 1 shows a payment system 10 which is configured as a system for making a payment through a computer 20 or a mobile terminal 30 by a person who purchases an article online through a commodity sale website (Internet shopping). The payment system 10 includes a payment application distribution server 11 which transmits an application program (which may also be termed payment application) for a mobile terminal. The application program is used for online purchase of an article from a commodity sale website.

Besides the payment application distribution server 11, the payment system 10 further includes a commodity management server 12, a delivery administration server 13, and a payment server 14, as will be described later. These servers 11 to 14 are operable on the internet N and communicably connected to a computer 20 and a mobile terminal 30 via the internet N. Each of these servers 11 to 14 is configured a known computer system which is operable on preset computer programs and which provides various units functionally realized by processing the programs.

Such a commodity sale website is managed by a commodity distributor, such as an electronic commerce (EC) shop, by using a commodity management server 12, and is formulated such that the payment method that uses a payment server 14 can be adopted (see Fig. 1). Furthermore, the commodity sale website is configured such that the computer 20, the mobile terminal 30, or the like can make an access to the website via the Internet N to inspect/search each article that is a target of sale, or obtain detailed information of the article on the screen, for possible purchase of the article. Specifically, the commodity sale website is ready to provide pages, including an article selection page for selecting an article to be purchased, a purchaser information inputting page for inputting the purchaser's individual information, delivery destination, and the like, a payment method selection page for selecting a payment method for the chosen article, and the like.

The payment method selection page is prepared for the computer 20 and for the payment application installed in the mobile terminal 30. Thus, the payment methods selectable for the computer 20 are discriminated from the payment methods selectable for payment using the payment application. Thus, for the payment of the chosen article, the address information for accessing the payment method selection page for the payment application (also termed application payment address information hereinafter) is different from the address information for accessing the payment method selection page for the computer 20.

The present embodiment particularly adopts various payment methods using the payment application, such as payment by cash or direct debit based on payment on delivery, or payment by credit card, electronic money, and the like. To facilitate access to the payment method selection page for the payment application by the mobile terminal 30 that has installed the payment application, an information code is made available, in which the address information for application payment is recorded (this code is also termed application payment code C1 hereinafter). The application payment code C1 is generated by the commodity management server 12 or the like in conformity with the chosen article when a payment method is selected, and the generated code is indicated on the screen.

Specifically, the application payment code C1 is configured as a partially non-public code including a public area and a non-public area. The public area includes a record of information that can be made public, while the non-public area includes a record of encrypted information that can be decrypted using a decryption key. The application payment address information is recorded on the non-public area of the application payment code C1. The public area includes a record of the address information of the website (download site) for downloading the payment application from the payment application distribution server 11.

The decryption key is possessed by the payment application. When the application payment code C1 is read by the mobile terminal 30 that has installed the payment application, the application payment address information and the download site address information are acquired. When the application payment code C1 is read by a mobile terminal or the like that has not installed the payment application, the download site address information is acquired, without acquiring the application payment address information.

The delivery administration server 13 shown in Fig. 1 is operated by a delivery company or the like entrusted with delivery of the article by the commodity distributor or the like. The delivery administration server 13 is configured to administrate the delivery status of each entrusted article, according to the information received from the delivery terminal possessed by the delivery operator, the commodity management server 12, the mobile terminal 30, or the like. Moreover, the delivery management server 13 transmits delivery information regarding the delivery status of each entrusted article to the commodity management server 12. When the delivery information is received by the commodity management server 12, the commodity distributor or the like becomes aware of the delivery status of each article, including completion of the delivery.

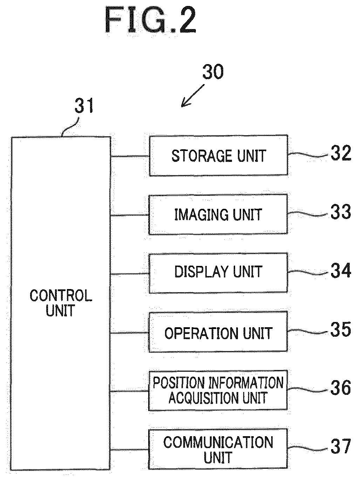

The mobile terminal 30 corresponds to a mobile information terminal, such as a smartphone, possessed by the purchaser, with the payment application being installed therein. As shown in Fig. 2, the mobile terminal 30 includes a control unit 31 provided with an operational processor (i.e., computer), a storage section 32, an imaging section 33, a display section 34, an operation section 35, a position information acquisition section 36, and a communication section 37. The control unit 31 includes a CPU. The storage section 32 includes a ROM, a RAM, a nonvolatile memory. The imaging section 33 is configured as a camera including a light-receiving sensor (e.g., C-MOS area sensor, CCD area sensor, or the like). The display section 34 includes a liquid crystal display. The operation section 35 is configured by operation keys, a touch panel (not shown), and the like. The position information acquisition section 36 acquires position information of the mobile terminal 30 by receiving GPS signals or the like. The communication section 37 is configured as an interface that can establish wired or wireless communication with external devices, such as the servers 11 to 14.

The payment application is installed in the mobile terminal 30 configured as mentioned above. The payment application in this case has been downloaded through the communication section 37 from the download site managed by the payment application distribution server 11. The payment application is started by the control unit 31 that serves as a processing section to perform payment processing associated with payment that will be described later. The storage section 32 stores in advance information related to individual information or delivery destination, or other information which are used in payment processing. The control unit 31 optically reads an information code by using a predetermined decoding method. The information code in this case includes a barcode or a QR code (registered trademark), as well as the application payment code C1 imaged by the imaging section 33, or an acknowledgement code C2 which will be described later. It should be noted that the control unit 31 and the imaging section 33 can correspond to an example of the reading section that optically reads an information code.

Referring to the drawings, a description will be specifically given of a flow in which the purchaser uses the computer 20 or the mobile terminal 30 for online purchase of an article from a commodity sale website.

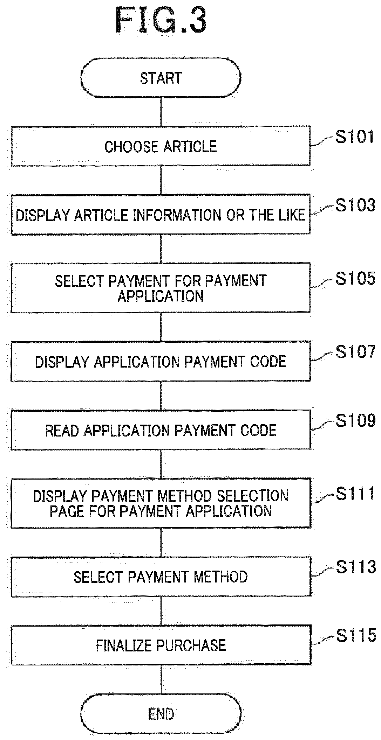

When the purchaser accesses a commodity sale website using the computer 20, an article search screen or the like is displayed on the monitor. As a result of article search or the like, the purchaser chooses an article (step S101 of Fig. 3). Thus, the computer 20 displays an icon for selecting a payment method, together with details or other information of the chosen article (step S103).

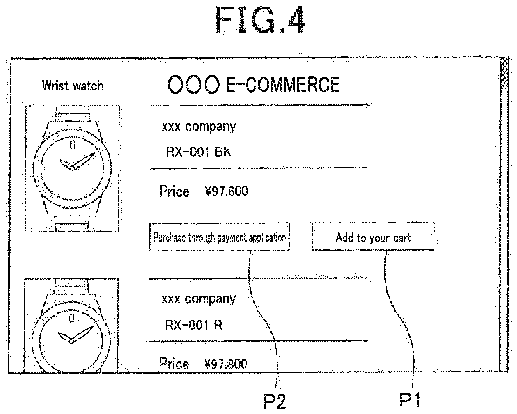

Specifically, as shown in Fig. 4, icons P1 and P2 are displayed on the screen. The icon P1 is for selecting a payment method for the computer 20, and the icon P2 is for selecting a payment method for the payment application. If the icon P1 is selected through the purchaser's input operation of the mouse or the like of the computer 20, the aforementioned payment method selection page for the computer 20 is displayed on the screen.

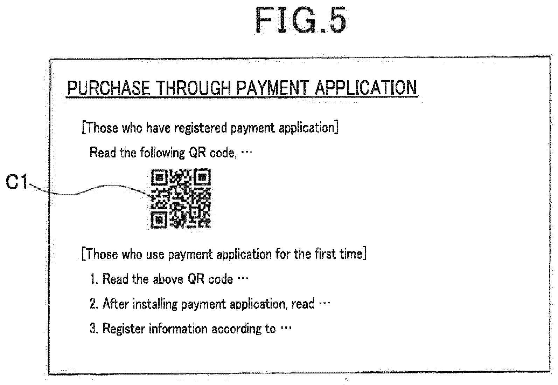

If the icon P2 is selected through the purchaser's input operation of the mouse or the like of the computer 20 (step S105), the application payment code C1 generated by the commodity management server 12 or the like according to the article chosen as described above is displayed on the screen (step S107). Specifically, as shown in Fig. 5, the screen displays, together with the application payment code C1, the information indicating the necessity of reading the application payment code C1 to carry out application payment, and the information prompting the purchaser to download the payment application if not yet installed in the mobile terminal. It should be noted that the computer 20 can correspond to an example of the display unit on which the application payment code C1 is displayed.

The purchaser uses the mobile terminal 30 to have it read the application payment code C1 displayed on the screen of the computer 20 (step S109). The mobile terminal 30 in this case is in a state of performing payment processing, with the payment application being started by the control unit 30. Thus, the mobile terminal 30 reads the application payment address information recorded on the non-public area of the application payment code C1, and uses the read address information to make an access to the payment method selection page for the payment application so that the display section 34 of the mobile terminal 30 can display the page on the screen (step Sill).

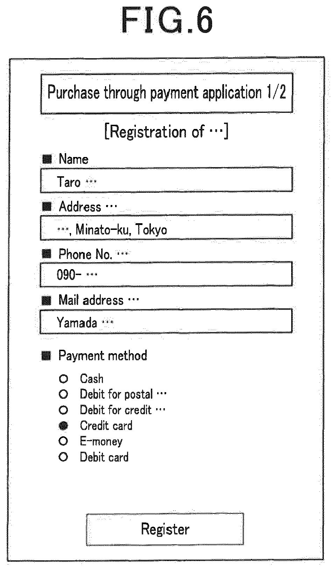

Specifically, as shown in Fig. 6, the screen selectably displays "payment methods" for the payment application. In this case, the mobile terminal 30 is in a state of having read and displayed the individual information, the information related to the delivery destination, or other information stored in advance in the storage section 32, for use in payment processing. The individual information, the information related to the delivery destination, or other information may be changed on the payment method selection page for the payment application, according to the operation of the operation section 35, or may be newly inputted.

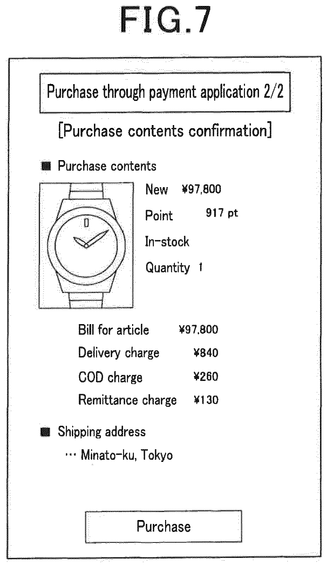

Then, any one of the payment methods is selected in according to the input operation of the operation section 35 that serves as the input unit (step S113), and the selected information is registered in response to selection of the "registration" icon. Then, as shown in Fig. 7, the display section 34 displays the information for confirming the article to be purchased, the amount of payment based on the selected payment method, or other information. Then, when the "purchase" icon is selected, the purchase of the article is finalized (step S115). In response to the finalization, purchase information including the information related to the purchaser and the delivery destination, the selected payment method, or other information are transmitted to the commodity sale website as article purchase finalized information via the communication section 37 serving as the transmission section. Then, the payment information related to the payment for the purchased article is transmitted to the payment server 14 via the communication section 37 serving as the transmission section. The payment server 14 carries out processing according to the payment information received from the mobile terminal 30. The payment information may be transmitted to the payment server 14 via the commodity sale website or the like. For clarity, Figs. 6 and 7 omit a "return" icon, or other icons.

Referring to the drawings, a description will be specifically given of a flow in which the purchased article is delivered to the destination, such as the door of the purchaser's house.

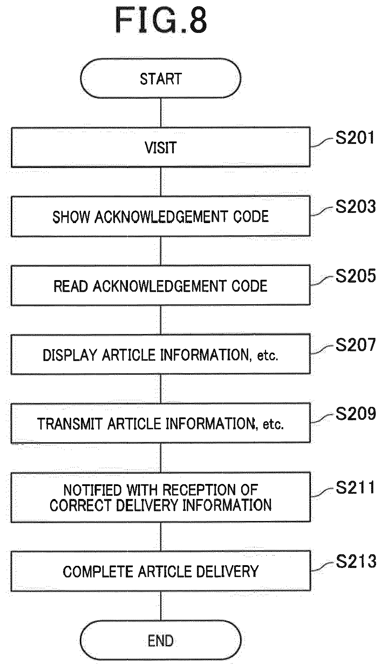

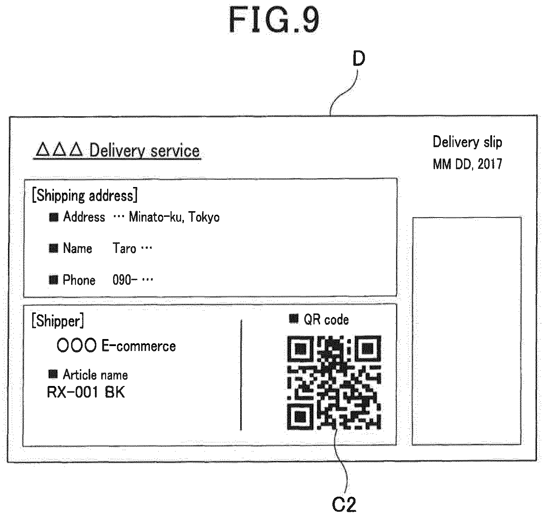

The delivery operator carries the purchased article together with a delivery slip D to visit the delivery destination (step S201 of Fig. 8). For example, as shown in Fig. 9, the delivery slip D indicates an acknowledgement code C2 generated as the second information code. The acknowledgement code C2 includes a record of the article information that can identify the purchased article at the time of delivery, or other information, in addition to the information related to the purchaser, the delivery destination, or the like. The acknowledgement code C2 is an information code generated for each article so that the delivery management server 13 can manage the delivery status of the article. Therefore, the acknowledgement code C2 includes not only a record of the article information, but also a record of transmission information based on which the read article information is transmitted to the delivery management server 13.

The delivery operator shows the purchaser, i.e. the article receiver, the acknowledgement code C2 of the delivery slip D (step S203) to prompt the purchaser to read the code using the mobile terminal 30 with the payment application being started. Then, the purchaser uses the mobile terminal 30 with the payment application being started, to read the acknowledgement code C2 of the delivery slip D (step S205). Thus, the mobile terminal 30 reads the article information, the delivery destination information, or other information recorded on the acknowledgement code C2 and displays the article information on the screen of the display section 34 (step S207). When the purchaser, who has seen the displayed article information, acknowledges the information and selects the "acknowledgement" icon displayed on the same screen, the article information is transmitted to the delivery management server 13 based on the transmission information, together with the individual information stored in the storage section 32, the position information acquired by the position information acquisition section 36, and other information (step S209).

Upon reception of the article information, the individual information, the position information, and other information transmitted from the mobile terminal 30 as mentioned above, the delivery management server 13 determines whether the article has been correctly delivered to the purchaser, based on the individual information, the delivery destination information, and other information stored in the database or the like, being associated with the article information. If the individual information associated with the article information agrees with the individual information received from the mobile terminal 30, and if the delivery destination information associated with the article information agrees with the position information received from the mobile terminal 30, information indicating correct delivery is transmitted to the mobile terminal 30.

When the correct delivery information is received from the delivery management server 13 after transmission of the article information and the like, the mobile terminal 30 is notified with the correct delivery information by indication on the display section 34, or by beep sound, or the like (step S211). Receiving this notification, the delivery operator confirms correct delivery of the article and passes the article to the purchaser to thereby complete delivery of the article (step S213). When indication on the display section 34 is used, the notification associated with the correct delivery information may be indicated on the display section 34 with words such as "Thank you for using our service."

However, no correct delivery information will be transmitted if the individual information associated with the article information in the delivery management server 13 does not agree with the individual information received from the mobile terminal 30, or if the delivery destination information associated with the article information in the delivery management server 13 does not agree with the position information received from the mobile terminal 30. In such a case, no notification is given from the delivery management server 13, or no correct delivery information is received by the mobile terminal 30, which leads to avoiding masquerade payment or the like fraudulently using the payment application.

As described above, in the payment system 10 according to the present embodiment, when an article is purchased from a commodity sale website, the computer 20 is provided with an indication of the application payment code C1 as an information code which includes a record of application payment address information of the payment method selection page related to the payment of the article. In the mobile terminal 30 that has installed the payment application, when the application payment address information is read from the application payment code C1 displayed on the computer 20 in a state where the payment application has been started by the control unit 31, the payment method selection page is accessed based on the application payment address information and displayed on the display section 34. When any one of the plurality of payment methods selectably indicated on the payment method selection page is selected according to the input operation of the operation section 35, the result of the selection is transmitted to the commodity sale website through the communication section 37, together with the purchase information.

Thus, in order to select any one of the payment methods on the payment method selection page when purchasing an article from a commodity sale website, it is necessary to read the application payment code C1 including a record of the application payment address information of the payment method selection page, by using the mobile terminal 30 that has installed the payment application. Therefore, even when the payment method indicated on the payment method selection page includes the payment method that uses the payment application, a mobile terminal or the like that has not installed the payment application cannot make an access to the payment method selection page, and cannot select the payment method that uses the payment application. Thus, the payment method that is not available at the time of receiving the article is prevented from being selected at the time of purchasing the article.

Furthermore, the application payment code C1 is a partially non-public code including a public area and a non-public area. The public area has a record of information that can be made public, while the non-public area has a record of encrypted application payment address information that can be decrypted using a decryption key. Using the decryption key possessed by the payment application, the application payment address information is read by the mobile terminal 30 from the application payment code C1. Accordingly, a mobile terminal that has not installed the payment application cannot even read the application payment address information, and thus cannot make an access to the payment method selection page, reliably disabling selection of the payment method that uses the payment application.

In particular, the public area of the application payment code C1 includes a record of the address information of the website (download site) for downloading the payment application from the payment application distribution server 11. Thus, if the application payment code C1 displayed on the computer 20 is read by a mobile terminal or the like that has not installed the payment application, the address information of the download site of the payment application is acquired. Therefore, the purchaser can be prompted to download the payment application, and can easily download the payment application.

Furthermore, when the article information recorded on the acknowledgement code C2 is read by the mobile terminal 30 in a state where the payment application has been started by the control unit 31 and the payment processing is being conducted, the article information and the information related to the purchaser are transmitted to the delivery management server 13 through the communication section 37. Thus, when the acknowledgement code C2 shown by the delivery operator when receiving the article is read by the mobile terminal 30 with the payment application being started, the delivery management server 13 becomes promptly and correctly aware of the article received by the purchaser and the time of reception based on the information received from the mobile terminal 30. In this way, delivery management of articles can be efficiently conducted.

Furthermore, when the article information recorded on the acknowledgement code C2 is read by the mobile terminal 30 in a state where the payment application has been started by the control unit 31 and the payment processing is being conducted, the position information of the mobile terminal 30 acquired by the position information acquisition section 36 is transmitted to the delivery management server 13 through the communication section 37, together with the article information and the information related to the purchaser. Thus, the delivery management server 13 becomes promptly and correctly aware of not only the article received by the purchaser and the time of reception, but also the place of reception. Therefore, delivery management can be conducted with high security.

The present invention should not be limited to the embodiment described above, but may, for example, be embodied as follows.
(1) The acknowledgement code C2 is not limited to be indicated on the delivery slip D, but may be displayed on the screen of the delivery mobile terminal or the like possessed by the delivery operator.
(2) The correct delivery information is not limited to be transmitted to the mobile terminal 30, but may be transmitted to the delivery mobile terminal or the like possessed by the delivery operator. Thus, reception of the correct delivery information can be notified by indication on the screen of the delivery mobile terminal or the like, or by beep sound or the like. The delivery operator who has received the notification can confirm correct delivery of the article.
(3) The application payment code C1 is not limited to be configured as a partially non-public code, but may be configured as an information code encrypted with a predetermined password or the like, according to the usage environment or the like, or may be configured as a normally used information code that is readable by a generally used reading device.

## Claims

1. A payment system for a purchaser to make a payment for merchandise purchase by using a mobile terminal and a display unit, comprising:
a payment application distribution server that distributes a payment application that is an application program installed in the mobile terminal to purchase an article from a commodity sale website, wherein:
when an article is purchased from the commodity sale website, the display unit displays an information code including a record of address information of a payment method selection page associated with the article;
the mobile terminal that has installed the payment application distributed from the payment application distribution server includes:
a processing section that performs payment processing associated with payment, upon start of the payment application;
a reading section that optically reads the information code displayed on the display unit in a state where the processing section is performing the payment processing;
a display section that displays the payment method selection page when the address information is read by the reading section and the payment method selection page is accessed based on the address information;
an input section that is operated when inputting any one of a plurality of payment methods selectably indicated on the payment method selection page; and
a transmission section that transmits a selection result resulting from the input operation of the input section to the commodity sale website, together with purchase information including information associated with a purchaser and a delivery destination.

2. The payment system according to claim 1, wherein:
the information code is a partially non-public code having a public area including a record of information that can be made public, and a non-public area including a record of the address information that is encrypted so as to be decrypted using a decryption key; and
the reading section reads the address information from the information code, using the decryption key possessed by the payment application.

3. The payment system according to claim 2, wherein the public area includes a record of address information of a website for downloading the payment application from the payment application distribution server.

4. The payment system according to any one of claims 1 to 3, wherein:
the payment system comprises a delivery management server that manages delivery of an article;
when an article is delivered, a second information code is generated, including a record of article information that can identify a purchased article; and
when the reading section reads the article information recorded on the second information code in a state where the payment processing is being performed by the processing section, the transmission section transmits the article information and information associated with a purchaser to the delivery management server.

5. The payment system according to claim 4, wherein:
the mobile terminal includes a position information acquisition section that acquires position information of the mobile terminal; and
when the reading section reads the article information recorded on the second information code in a state where the payment processing is being performed by the processing section, the transmission section transmits position information of the mobile terminal acquired by the position information acquisition section to the delivery management server, together with the article information and the information associated with a purchaser.

6. A payment method for a purchaser to make a payment for commodity purchase by using a mobile terminal and a display unit, comprising:
distributing a payment application that is an application program installed in the mobile terminal to purchase an article from a commodity sale website, wherein:
when an article is purchased from the commodity sale website, making the display unit display an information code including a record of address information of a payment method selection page associated with the article; and
making the mobile terminal that has installed the payment application distributed from the payment application distribution server
perform payment processing associated with payment, upon start of the payment application;
optically read the information code displayed on the display unit in a state where the processing section is performing the payment processing;
display the payment method selection page when the address information is read by the reading section and the payment method selection page is accessed based on the address information;
select any one of a plurality of payment methods selectably indicated on the payment method selection page; and
transmit a selection result resulting from the input operation of the input section to the commodity sale website, together with purchase information including information associated with a purchaser and a delivery destination.
